# EUROPÄISCHE PATENTSCHRIFT

(11) **EP 3 152 105 B1**
(45) Veröffentlichungstag und Bekanntmachung des Hinweises auf die Patenterteilung: **13.06.2018**
(21) Anmeldenummer: 15715223.2
(22) Anmeldetag: 07.04.2015
(51) Int. Cl.: B62M 6/45

(54) **VERFAHREN UND VORRICHTUNG ZUR ANSTEUERUNG EINES MOTORS EINES ELEKTRISCHEN ZWEIRADS**
METHOD AND DEVICE FOR ACTUATING A MOTOR OF AN ELECTRIC TWO-WHEELED VEHICLE
PROCÉDÉ ET DISPOSITIF DE COMMANDE D'UN MOTEUR D'UN VÉHICULE ÉLECTRIQUE À DEUX ROUES

(30) Priorität: 06.06.2014 DE 102014210952
(43) Veröffentlichungstag der Anmeldung: 12.04.2017
(73) Patentinhaber: Robert Bosch GmbH, 70442 Stuttgart (DE)
(72) Erfinder: DASBACH, Gregor, 72074 Tuebingen (DE); KOHLRAUSCH, Philipp, 70180 Stuttgart (DE)
(86) Internationale Anmeldenummer: PCT/EP2015/057445
(87) Internationale Veröffentlichungsnummer: WO 2015/185246

(56) Entgegenhaltungen:
- DE-A1- 4 203 920
- DE-A1-102012 211 719
- GB-A- 2 485 216
- JP-A- 2010 155 523
- US-A- 5 553 007
- US-A1- 2011 254 673

## Beschreibung

### Stand der Technik

Die Erfindung betrifft ein Verfahren (beansprucht im Anspruch 1) und eine Vorrichtung (beansprucht im Anspruch 7) zur Ansteuerung eines Motors eines elektrischen Zweirads, sowie ein elektrisches Zweirad mit einer solchen Vorrichtung (beansprucht im Anspruch 9). Die DE-A-10 2012 211719 offenbart eine Vorrichtung mit den vorkennzeichnenden Merkmalen des Anspruchs 7, und die mit diesen Merkmalen übereinstimmenden Verfahrensmerkmalen des Anspruchs 1. Bei elektrischen Zweirädern wird in der Regel die Leistung des Fahrers gemessen und in Abhängigkeit der gemessenen Leistung des Fahrers ein Motordrehmoment zugeschaltet, um den Fahrer zu unterstützen. Die elektrischen Zweiräder können eine GPS-fähige Bedieneinheit aufweisen. Neben der Anzeige von Fahrdaten kann eine Navigation mit gespeichertem Kartenmaterial durchgeführt werden. Eine bekannte Funktion ist die Funktion eines virtuellen Trainingspartners. Hierzu ist es bekannt, den Abstand des Fahrers zum virtuellen Trainingspartner beispielsweise auf einem Display anzuzeigen.

Nachteilig ist hierbei, dass nur der Abstand zwischen dem Fahrer und dem virtuellen Trainingspartner angezeigt wird. Der Effekt des Fahrens im Windschatten wird nicht berücksichtigt.

Die Aufgabe der Erfindung ist es, dem Fahrer eine realistische Simulation des gemeinschaftlichen Zweiradfahrens zur Verfügung zu stellen.

### Offenbarung der Erfindung

Das Verfahren und die Vorrichtung zur Ansteuerung eines Motors eines elektrischen Zweirads umfassen das Bestimmen einer Position eines Fahrers des elektrischen Zweirads in Abhängigkeit eines ersten GPS-Signals, wobei das erste GPS-Signal eine zeitliche Abhängigkeit zu einer Startposition aufweist. Unter dem Begriff Startposition wird ein örtlicher Startpunkt verstanden an dem der Fahrer des elektrischen Zweirads seine Fahrt startet. Es wird eine Position eines virtuellen Trainingspartners in Abhängigkeit eines zweiten GPS-Signals bestimmt, wobei das zweite GPS-Signal eine zeitliche Abhängigkeit zur Startposition aufweist. Ein Abstand zwischen der Position des Fahrers des elektrischen Zweirads und der Position des virtuellen Trainingspartners wird bestimmt. Erfindungsgemäß wird ein Windschatteneffekt in Abhängigkeit einer Gesamtstirnfläche und des bestimmten Abstands bestimmt. Unter dem Begriff Windschatteneffekt wird hier der Effekt verstanden, den der Fahrer wahrnimmt, wenn durch den virtuellen Trainingspartner Windschatten erzeugt wird. Bei der Gesamtstirnfläche handelt es sich um die frontale Angriffsfläche für den Wind, die der reale Fahrer und die Geometrie des elektrischen Zweirads bilden. Ein Motordrehmoment wird in Abhängigkeit des Windschatteneffekts und/ oder des bestimmten Abstands erzeugt.

Der Vorteil ist hierbei, dass der Fahrer des elektrischen Zweirads den Windschatten seines virtuellen Trainingspartners auszunutzen kann.

In einer Weiterbildung wird das Motordrehmoment zusätzlich in Abhängigkeit eines seitlichen Versatzes der Position des Fahrers zur Bewegungslinie des virtuellen Trainingspartners erzeugt. Mit seitlichem Versatz ist hier der Abstand der Position des Fahrers senkrecht zur Bewegungslinie des virtuellen Trainingspartners gemeint. Die Bewegungslinie des virtuellen Trainingspartners ist hierbei die zurückgelegte Fahrtstrecke des virtuellen Trainingspartners.

Vorteilhaft ist hierbei, dass der Fahrer des elektrischen Zweirads eine geringe Unterstützung durch den Windschatten erhält, obwohl er nicht direkt der Bewegungslinie des virtuellen Trainingspartners folgt.

In einer weiteren Ausgestaltung wird die Gesamtstirnfläche in Abhängigkeit einer Lenkerform des elektrischen Zweirads und der Fahrergröße bestimmt.

In einer Weiterbildung wird die Position des virtuellen Trainingspartners aus einer in einer Steuereinheit des elektrischen Zweirads gespeicherten Fahrt derselben Fahrstrecke bestimmt. Es handelt sich hier insbesondere um eine Fahrt, die der Fahrer zuvor schon einmal durchgeführt hat.

Der Vorteil ist hierbei, dass der Fahrer gegen sich selbst fahren kann und somit sein Training effizienter gestalten kann.

In einer weiteren Ausgestaltung kann der Fahrer eine Fahrstrecke des virtuellen Trainingspartners mit Hilfe einer in der Steuereinheit gespeicherten Landkarte planen. Die Fahrstrecke kann in verschiedene Streckenabschnitte unterteilt werden, wobei die Streckenabschnitte eine unterschiedliche Länge aufweisen können. Der Fahrer gibt die Zeitdauer vor, die der virtuelle Trainingspartner zum Durchfahren des Streckenabschnitts benötigt. Die Position des virtuellen Trainingspartners ist in Abhängigkeit der zweiten GPS-Signale bestimmbar. Optional ist die Position des virtuellen Trainingspartners mit Hilfe einer Durchschnittsgeschwindigkeit des Streckenabschnitts bestimmbar.

Vorteilhaft ist hierbei, dass der Fahrer seine Trainingsstrecke individuell planen kann.

In einer Weiterbildung ist der Windschatteneffekt in Abhängigkeit der Gesamtstirnfläche des virtuellen Trainingspartners einstellbar.

Der Vorteil ist hierbei, dass die Größe des Windschattenbereichs einstellbar ist.

Die erfindungsgemäße Vorrichtung weist eine Bedieneinheit auf, die insbesondere zur Eingabe von Fahrerdaten und/ oder zur Auswahl einer Fahrstrecke, insbesondere mit einem virtuellen Trainingspartner, vorgesehen ist.

Das erfindungsgemäße elektrische Zweirad weist eine erfindungsgemäße Vorrichtung auf, die eine Steuereinheit mit Speicher aufweist. Die Steuereinheit erfasst ein erstes GPS-Signal, das eine Position des Fahrers des elektrischen Zweirads repräsentiert. Das erste GPS-Signal weist dabei eine zeitliche Abhängigkeit zu einer Startposition auf. Die Steuereinheit erfasst ein zweites GPS-Signal, das eine Position eines virtuellen Trainingspartners repräsentiert. Das zweite GPS-Signal weist eine zeitliche Abhängigkeit zu der Startposition auf. Die Steuereinheit bestimmt einen Abstand zwischen der Position des Fahrers des elektrischen Zweirads und der Position des virtuellen Trainingspartners. Die Steuereinheit bestimmt einen Windschatteneffekt in Abhängigkeit einer Gesamtstirnfläche und des Abstands. Die Steuereinheit erzeugt ein Signal zur Ansteuerung des Motors des elektrischen Zweirads in Abhängigkeit des Windschatteneffekts und/ oder des Abstands. Die Steuereinheit des elektrischen Zweirads führt ein erfindungsgemäßes Verfahren durch.

Weitere Vorteile ergeben sich aus der nachfolgenden Beschreibung von Ausführungsbeispielen bzw. aus den abhängigen Patentansprüchen.

### Kurze Beschreibung der Zeichnungen

Die vorliegende Erfindung wird nachfolgend anhand bevorzugter Ausführungsformen und beigefügter Zeichnungen erläutert. Es zeigen:
- Figur 1: eine Vorrichtung zur Ansteuerung eines Motors eines elektrischen Zweirads,
- Figur 2: ein Ablaufdiagramm eines Verfahren zur Ansteuerung eines Motors eines elektrischen Zweirads und
- Figur 3: ein Motordrehmoment in Abhängigkeit des Abstands zwischen der Position des Fahrers des elektrischen Zweirads und der Position des virtuellen Trainingspartners.

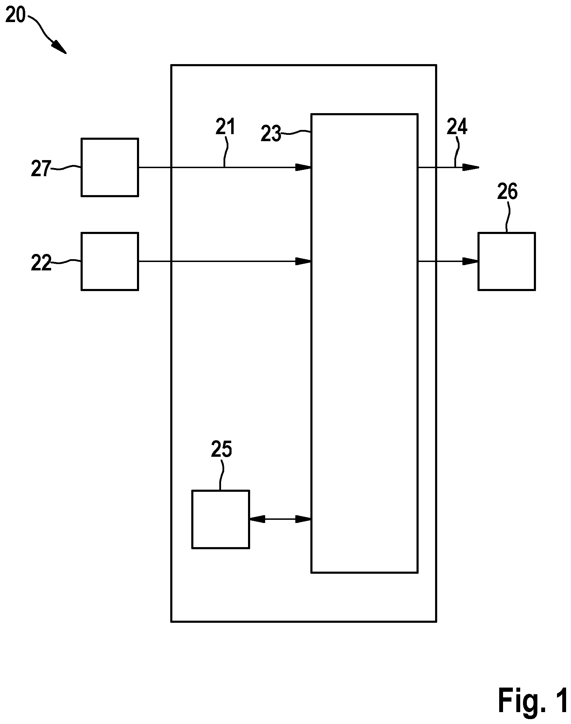

Figur 1 zeigt eine Vorrichtung 20 zur Ansteuerung eines Motors eines elektrischen Zweirads. Die Vorrichtung 20 weist eine Bedieneinheit 22, eine Steuereinheit 23, einen Speicher 25 und optional ein Display 26 auf. Eine Empfangseinheit 27 der Steuereinheit 20 erfasst erste GPS-Signale 21 zur Bestimmung der Position eines Fahrers eines elektrischen Zweirads. Die Steuereinheit 23 erfasst ebenfalls Eingaben, die mit Hilfe der Bedieneinheit 22 eingegeben werden und von der Steuereinheit 23 im Speicher 25 gespeichert bzw. zwischengespeichert werden. Die Steuereinheit 23 erzeugt ein Signal 24 zur Ansteuerung des Motors des elektrischen Zweirads. Das Signal 24 erzeugt ein Motordrehmoment mit dem der Fahrer bei der Fahrt mit seinem elektrischen Zweirad unterstützt wird.

In einem weiteren Ausführungsbeispiel ist die Bedieneinheit 22 in Greifnähe des Fahrers, beispielsweise am Lenker des elektrischen Zweirads, angeordnet. Die Bedieneinheit 22 kann als festinstallierter Bordcomputer ausgestaltet sein. In diesem Fall fungiert der Bordcomputer als Human-Machine-Interface.

In einem weiteren Ausführungsbeispiel umfasst die Bedieneinheit 22 ein Smartphone, das über eine drahtlose Verbindung, beispielsweise über Bluetooth, mit einem Bordcomputer des elektrischen Zweirads verbunden ist. In diesem Fall erfasst der Bordcomputer die Daten, die mit Hilfe des Smartphones eingegeben werden und leitet sie weiter an die Steuereinheit.

In einem weiteren Ausführungsbeispiel umfasst die Bedieneinheit 22 einen Computer, der über eine Verbindung wie USB, Bluetooth oder WLAN mit dem Bordcomputer verbunden ist. In diesem Fall erfasst der Bordcomputer die Daten, die mit Hilfe des Computers eingegeben werden und leitet sie weiter an die Steuereinheit.

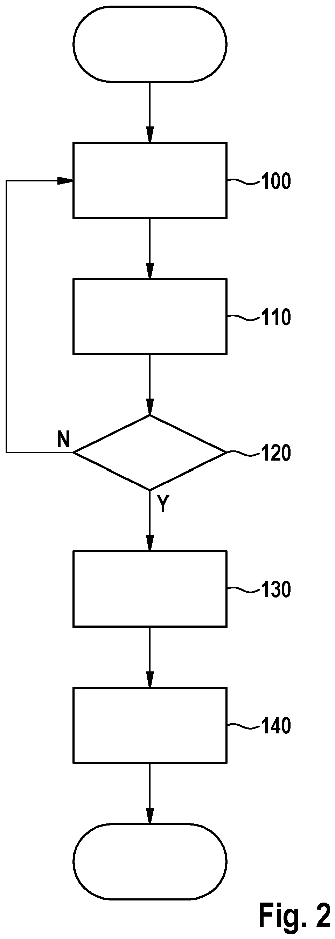

Figur 2 zeigt ein Verfahren zur Ansteuerung eines Motors eines elektrischen Zweirads. Das Verfahren wird mit Schritt 100 gestartet, indem eine Position eines Fahrers des elektrischen Zweirads mit Hilfe einer Steuereinheit bestimmt wird. Die Position wird beispielsweise in Abhängigkeit eines ersten GPS-Signals bestimmt, wobei das erste GPS-Signal mit einer Empfangseinheit erfasst wird. Das erste GPS-Signal weist eine zeitliche Abhängigkeit zu einer Startposition auf. In einem folgenden Schritt 110 wird eine Position eines virtuellen Trainingspartners in Abhängigkeit eines zweiten GPS-Signals bestimmt. Dieses zweite GPS-Signal wurde bei einer vorab getätigten Fahrt derselben Fahrstrecke erzeugt und im Speicher der Steuereinheit abgelegt. Das bedeutet, das zweite GPS-Signal wird aus dem Speicher erfasst und die Steuereinheit bestimmt die Position des virtuellen Trainingspartners. Auch das zweite GPS-Signal weist eine zeitliche Abhängigkeit zur Startposition auf. In einem folgenden Schritt 120 wird ein Abstand zwischen der Position des Fahrers des elektrischen Zweirads und der Position des virtuellen Trainingspartners bestimmt, indem das erste GPS-Signal und das zweite GPS-Signal miteinander verglichen bzw. das erste GPS-Signal vom zweiten GPS-Signal subtrahiert wird. Weist die Differenz der GPS-Signale einen positiven Wert oder null auf, d. h. der Fahrer des elektrischen Zweirads ist langsamer als der virtuelle Trainingspartner, so wird in einem folgenden Schritt 130 ein Windschatteneffekt in Abhängigkeit einer Gesamtstirnfläche und des in Schritt 120 bestimmten Abstands bestimmt. Weist die Differenz der GPS-Signale einen negativen Wert oder null auf, d.h. der Fahrer ist schneller oder genauso schnell wie der virtuelle Trainingspartner, so wird das Verfahren beendet oder neu gestartet. In einem auf den Schritt 130 folgenden Schritt 140 wird ein Motordrehmoment in Abhängigkeit des Windschatteneffekts und/ oder des im Schritt 120 bestimmten Abstands bestimmt.

In einem weiteren Ausführungsbeispiel wird der Fahrer des elektrischen Zweirads auch dann vom Windschatteneffekt profitieren, wenn er seitlich versetzt zur Bewegungslinie des virtuellen Trainingspartners fährt, d. h. nicht auf der Ideallinie fährt. Der seitliche Versatz wird durch einen senkrechten Abstand der Position des Fahrers zur Bewegungslinie des virtuellen Trainingspartners bestimmt. Das Motordrehmoment wird zusätzlich in Abhängigkeit des seitlichen Versatzes bestimmt. Je geringer der seitliche Versatz, desto größer das unterstützende Motordrehmoment.

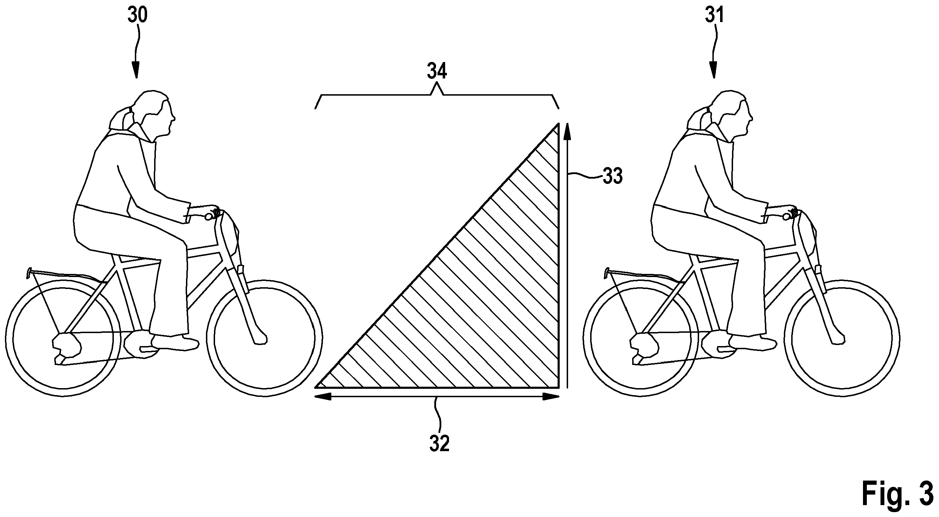

Figur 3 zeigt das Motordrehmoment 33 in Abhängigkeit des Abstands 32. Es handelt sich hierbei um eine lineare Funktion. Je geringer der Abstand des Fahrers 30 des elektrischen Zweirads zum virtuellen Trainingspartners 31, desto größer ist das zusätzliche Motordrehmoment 33, das den Fahrer 30 des elektrischen Zweirads unterstützt. Der maximale Abstand bei dem der Fahrer 30 des elektrischen Zweirads den Effekt des Windschattens 34 noch ausnutzen kann, beträgt ungefähr fünf Meter. Das bedeutet der Fahrer 30 profitiert von einer zusätzlichen Unterstützung des Windschattens, wenn der Abstand 32 von maximal fünf Metern zum virtuellen Trainingspartner 31 unterschritten wird.

Die Gesamtstirnfläche ist abhängig von der Geometrie des elektrischen Zweirads inklusive der Lenkerhaltung und der Größe des Fahrers. Bei der Gesamtstirnfläche handelt es sich um die Fläche des elektrischen Zweirads samt Fahrer, die dem Wind frontal ausgesetzt ist. Die Gesamtstirnfläche kann beispielsweise mit einer Näherungsformel berechnet werden, die sowohl zwei Konstanten a und b, als auch die Größe des Fahrers und den Luftwiderstandsbeiwert berücksichtigt. Die Näherungsformel lautet: Luftwiderstandsbeiwert * Gesamtstirnfläche [m²] = a [m²] + b [m²/cm] * Größe des Fahrers [cm]. Bei der Lenkerhaltung des elektrischen Zweirads wird zwischen verschiedenen Zweiradtypen beispielsweise Tourenrad, Rennrad mit Oberlenker, Rennrad mit Unterlenker unterschieden. Die Konstanten für das Tourenrad sind ungefähr a=0,5 und b=0,0015, für das Rennrad mit Oberlenker ungefähr a=0,32 und b=0,001, für das Rennrad mit Unterlenker ungefähr a=0,26 und b=0,0005. Die Größe des Fahrers kann mit Hilfe der Bedieneinheit eingegeben werden oder aus dem Speicher ausgelesen werden.

Die Position des virtuellen Trainingspartners kann während einer Fahrt des Fahrers, einer sogenannten Trainingsfahrt, mit Hilfe der Steuereinheit über GPS-Signale erfasst werden. Das Aufzeichnen bzw. das Speichern der Trainingsfahrt wird mit Hilfe der Bedieneinheit gesteuert. Es können dabei mehrere Trainingsfahrten gespeichert werden.

In einem weiteren Ausführungsbeispiel wird die Position des Fahrers des elektrischen Zweirads während einer Fahrt mit Hilfe einer in der Steuereinheit gespeicherten Landkarte bestimmt, indem der Fahrer seinen Startpunkt beispielsweise mit Hilfe der Bedieneinheit markiert. Die Position des virtuellen Trainingspartners kann mit Hilfe der gespeicherten Landkarte bestimmt werden, indem der Fahrer eine Fahrstrecke auswählt, bei der der Startpunkt mit seiner aktuellen Position übereinstimmt oder vergleichbar ist. Die Fahrstrecke kann der Fahrer in verschiedene Streckenabschnitte unterteilen und für jeden Streckenabschnitt eine bestimmte Zeitdauer vorgeben, die der virtuelle Trainingspartner benötigen soll, um den Streckenabschnitt zu durchfahren. Dabei kann der virtuelle Trainingspartner entweder mit einer bestimmten Geschwindigkeit, der sogenannten Durchschnittsgeschwindigkeit fahren, oder die Geschwindigkeit innerhalb des Streckenabschnitts variieren, sodass verschiedene Trainingsmodi simuliert werden können, beispielsweise in Form einer Rampenfunktion, d. h. die Geschwindigkeit steigt über den Streckenabschnitt an. Optional kann die Gesamtstirnfläche des virtuellen Trainingspartners verändert werden, sodass sich der Bereich des Windschattens verändert.

In einem weiteren Ausführungsbeispiel kann der Fahrer des elektrischen Zweirads mit mehreren virtuellen Trainingspartnern fahren. Dadurch kann ein sogenannter Belgischer Kreisel simuliert werden, indem sich der Fahrer und die virtuellen Trainingspartner reihum mit der Führungsrolle abwechseln.

In einem weiteren Ausführungsbeispiel wird der Abstand des Fahrers des elektrischen Zweirads auf einem Display des elektrischen Zweirads angezeigt. Das Display ist dabei mit der Steuereinheit verbunden.

In einem weiteren Ausführungsbeispiel kann die Windrichtung mit Hilfe der Steuereinheit erfasst werden. In Abhängigkeit der Windrichtung kann dem Fahrer des elektrischen Zweirads die optimale Position des Fahrers im Vergleich zur Bewegungslinie des virtuellen Trainingspartners auf dem Display angezeigt werden, sodass er eine größtmögliche Unterstützung durch den Motor erhält, wenn er auf dieser Position dem virtuellen Trainingspartner folgt.

## Patentansprüche

1. Verfahren zur Ansteuerung eines Motors eines elektrischen Zweirads mit den Schritten:
• Bestimmen (100) einer Position eines Fahrers des elektrischen Zweirads in Abhängigkeit eines ersten GPS-Signals, wobei das erste GPS-Signal eine zeitliche Abhängigkeit zu einer Startposition aufweist,
• Bestimmen (110) einer Position eines virtuellen Trainingspartners in Abhängigkeit eines zweiten GPS-Signals, wobei das zweite GPS-Signal eine zeitliche Abhängigkeit zur Startposition aufweist,
• Bestimmen (120) eines Abstands zwischen der Position des Fahrers des elektrischen Zweirads und der Position des virtuellen Trainingspartners,
• Bestimmen (130) eines Windschatteneffekts in Abhängigkeit einer Gesamtstirnfläche, die durch das elektrische Zweirad und den Fahrer gebildet wird und des bestimmten Abstands, und
• Erzeugen (140) eines Motordrehmoments in Abhängigkeit des Windschatteneffekts und/oder des bestimmten Abstands.

2. Verfahren nach Anspruch 1, **dadurch gekennzeichnet, dass** das Motordrehmonent zusätzlich in Abhängigkeit eines seitlichen Versatzes der Position des Fahrers zur Bewegungslinie des virtuellen Trainingspartners erzeugt wird.

3. Verfahren nach einem der Ansprüche 1 oder 2, **dadurch gekennzeichnet, dass** die Gesamtstirnfläche in Abhängigkeit einer Lenkerform des elektrischen Zweirads und der Fahrergröße bestimmt wird.

4. Verfahren nach einem der vorhergehenden Ansprüche, **dadurch gekennzeichnet, dass** die Position des virtuellen Trainingspartners in Abhängigkeit der zweiten GPS-Signale bestimmt wird, wobei die zweiten GPS-Signale mit Hilfe einer Fahrt auf derselben Fahrstrecke in der Steuereinheit (23) gespeichert wurden, insbesondere durch eine Fahrt desselben Fahrers.

5. Verfahren nach einem der Ansprüche 1 bis 3, **dadurch gekennzeichnet, dass** der Fahrer, insbesondere vor Fahrtbeginn, eine Fahrstrecke mit Hilfe der gespeicherten Landkarte auswählen kann und die Fahrstrecke in verschiedene Streckenabschnitte unterteilen kann für die der Fahrer eine Zeitdauer vorgibt, sodass die Position des virtuellen Trainingspartners in Abhängigkeit der zweiten GPS-Signale bestimmbar ist.

6. Verfahren nach Anspruch 5, **dadurch gekennzeichnet, dass** der Windschatteneffekt in Abhängigkeit der Gesamtstirnfläche des virtuellen Trainingspartners einstellbar ist.

7. Vorrichtung (20) zur Ansteuerung eines Motors eines elektrischen Zweirads mit
• einer Steuereinheit (23), die einen Speicher (25) aufweist, wobei die Steuereinheit (23)
∘ ein erstes GPS-Signal (21) erfasst, das eine Position des Fahrers des elektrischen Zweirads repräsentiert, wobei das erste GPS-Signal eine zeitliche Abhängigkeit zu einer Startposition aufweist und
∘ ein zweites GPS-Signal erfasst, das eine Position eines virtuellen Trainingspartners repräsentiert, wobei das zweite GPS-Signal eine zeitliche Abhängigkeit zu einer Startposition aufweist,
∘ einen Abstand zwischen der Position des Fahrers des elektrischen Zweirads und der Position des virtuellen Trainingspartners bestimmt,
**dadurch gekennzeichnet, dass**
• die Steuereinheit (23)
∘ einen Windschatteneffekt in Abhängigkeit einer Gesamtstirnfläche, die durch das elektrische Zweirad und den Fahrer gebildet wird, und des Abstands bestimmt, und
∘ ein Signal (24) zur Ansteuerung des Motors des elektrischen Zweirads in Abhängigkeit des Windschatteneffekts und/ oder des Abstands erzeugt.

8. Vorrichtung (20) nach Anspruch 7, **dadurch gekennzeichnet, dass** eine Bedieneinheit (22) vorgesehen ist, insbesondere zur Eingabe von Fahrerdaten und/ oder zur Auswahl einer Fahrstrecke, insbesondere mit einem virtuellen Trainingspartner.

9. Elektrisches Zweirad mit einer Vorrichtung (20) nach einem der Ansprüche 7 oder 8 oder einem Verfahren nach einem der Ansprüche 1 bis 6, wobei die Vorrichtung (20) eine Steuereinheit (23) umfasst, die einen Speicher (25) aufweist, wobei die Steuereinheit (23)
∘ ein erstes GPS-Signal (21) erfasst, das eine Position des Fahrers des elektrischen Zweirads repräsentiert, wobei das erste GPS-Signal eine zeitliche Abhängigkeit zu einer Startposition aufweist und
∘ ein zweites GPS-Signal erfasst, das eine Position eines virtuellen Trainingspartners repräsentiert, wobei das zweite GPS-Signal eine zeitliche Abhängigkeit zu einer Startposition aufweist,
∘ einen Abstand zwischen der Position des Fahrers des elektrischen Zweirads und der Position des virtuellen Trainingspartners bestimmt,
**dadurch gekennzeichnet, dass**
• die Steuereinheit (23)
∘ einen Windschatteneffekt in Abhängigkeit einer Gesamtstirnfläche, die durch das elektrische Zweirad und den Fahrer gebildet wird, und des Abstands bestimmt, und
∘ ein Signal (24) zur Ansteuerung des Motors des elektrischen Zweirads in Abhängigkeit des Windschatteneffekts und/ oder des Abstands erzeugt.

## Claims

1. Method for actuating a motor of an electric two-wheeled vehicle, comprising the steps:
• determining (100) a position of a driver of the electric two-wheeled vehicle as a function of a first GPS signal, wherein the first GPS signal has a chronological dependence on a starting position,
• determining (110) a position of a virtual training partner as a function of a second GPS signal, wherein the second GPS signal has a chronological dependence on the starting position,
• determining (120) a distance between the position of the driver of the electric two-wheeled vehicle and the position of the virtual training partner,
• determining (130) a wind shadow effect as a function of an overall end face which is formed by the electric two-wheeled vehicle and the driver, and the determined distance, and
• generating (140) an engine torque as a function of the wind shadow effect and/or the determined distance.

2. Method according to Claim 1, **characterized in that** the engine torque is additionally generated as a function of a lateral offset of the position of the driver with respect to the movement line of the virtual training partner.

3. Method according to one of Claims 1 and 2, **characterized in that** the overall end face is determined as a function of a shape of the handlebars of the electric two-wheeled vehicle and the size of the driver.

4. Method according to one of the preceding claims, **characterized in that** the position of the virtual training partner is determined as a function of the second GPS signals, wherein the second GPS signals have been stored in the control unit (23) using a journey on the same route, in particular by means of a journey by the same driver.

5. Method according to one of Claims 1 to 3, **characterized in that** the driver, in particular before the start of the journey, can select a route using the stored map and can divide the route into various route sections for which the driver specifies a duration, with the result that the position of the virtual training partner can be determined as a function of the second GPS signals.

6. Method according to Claim 5, **characterized in that** the wind shadow effect can be set as a function of the overall end face of the virtual training partner.

7. Device (20) for actuating a motor of an electric two-wheeled vehicle comprising
• a control unit (23) which has a memory (25), wherein the control unit (23)
∘ detects a first GPS signal (21) which represents a position of the driver of the electric two-wheeled vehicle, wherein the first GPS signal has a chronological dependence on a starting position,
and
∘ detects a second GPS signal which represents a position of a virtual training partner, wherein the second GPS signal has a chronological dependence on a starting position,
∘ determines a distance between the position of the driver of the electric two-wheeled vehicle and the position of the virtual training partner,
**characterized in that**
• the control unit (23)
∘ determines a wind shadow effect as a function of an overall end face, which is formed by the electric two-wheeled vehicle and the driver, and the distance, and
∘ generates a signal (24) for actuating the motor of the electric two-wheeled vehicle as a function of the wind shadow effect and/or the distance.

8. Device (20) according to Claim 7, **characterized in that** an operating unit (22) is provided, in particular for inputting driver data and/or for selecting a route, in particular with a virtual training partner.

9. Electric two-wheeled vehicle comprising a device (20) according to one of Claims 7 and 8 or a method according to one of Claims 1 to 6, wherein the device (20) comprises a control unit (23) which has a memory (25), wherein the control unit (23)
∘ detects a first GPS signal (21) which represents a position of the driver of the electric two-wheeled vehicle, wherein the first GPS signal has a chronological dependence on the starting position and
∘ detects a second GPS signal which represents a position of a virtual training partner, wherein the second GPS signal has a chronological dependence on a starting position,
∘ determines a distance between the position of the driver of the electric two-wheeled vehicle and the position of the virtual training partner,
**characterized in that**
• the control unit (23)
∘ determines a wind shadow effect as a function of an overall end face, which is formed by the electric two-wheeled vehicle and the driver, and the distance, and
∘ generates a signal (24) for actuating the motor of the electric two-wheeled vehicle as a function of the wind shadow effect and/or the distance.

## Revendications

1. Procédé de commande d'un moteur d'un deux-roues électrique, comprenant les étapes suivantes :
* détermination (100) d'une position d'un conducteur du deux-roues électrique en fonction d'un premier signal de GPS, le premier signal de GPS possédant une dépendance temporelle à une position de départ,
* détermination (110) d'une position d'un partenaire de formation virtuel en fonction d'un deuxième signal de GPS, le deuxième signal de GPS possédant une dépendance temporelle à la position de départ,
* détermination (120) d'une distance entre la position du conducteur du deux-roues électrique et la position du partenaire de formation virtuel,
* détermination (130) d'un effet de sillage en fonction d'une surface frontale totale, laquelle est formée par le deux-roues électrique et le conducteur, et de la distance déterminée, et
* génération (140) d'un couple de moteur en fonction de l'effet de sillage et/ou de la distance déterminée.

2. Procédé selon la revendication 1, **caractérisé en ce que** le couple de moteur est en plus généré en fonction d'un décalage latéral de la position du conducteur par rapport à la ligne de déplacement du partenaire de formation virtuel.

3. Procédé selon l'une des revendications 1 ou 2, **caractérisé en ce que** la surface frontale totale est déterminée en fonction d'une forme de guidon du deux-roues électrique et de la taille du conducteur.

4. Procédé selon l'une des revendications précédentes, **caractérisé en ce que** la position du partenaire de formation virtuel est déterminée en fonction des deuxièmes signaux de GPS, les deuxièmes signaux de GPS ayant été mis en mémoire dans l'unité de commande (23) à l'aide d'un trajet sur le même itinéraire, notamment par un trajet du même conducteur.

5. Procédé selon l'une des revendications 1 à 3, **caractérisé en ce que** le conducteur, notamment avant le début du trajet, peut sélectionner un itinéraire à l'aide de la carte géographique mise en mémoire et peut diviser l'itinéraire en différentes portions d'itinéraire, pour lesquelles le conducteur prédéfinit une durée, de sorte que la position du partenaire de formation virtuel puisse être déterminée en fonction des deuxièmes signaux de GPS.

6. Procédé selon la revendication 5, **caractérisé en ce que** l'effet de sillage peut être réglé en fonction de la surface frontale totale du partenaire de formation virtuel.

7. Dispositif (20) pour commander un moteur d'un deux-roues électrique, comprenant :
* une unité de commande (23) qui possède une mémoire (25), l'unité de commande (23)
o acquérant un premier signal de GPS (21) qui représente une position du conducteur du deux-roues électrique, le premier signal de GPS possédant une dépendance temporelle à une position de départ, et
o acquérant un deuxième signal de GPS qui représente une position d'un partenaire de formation virtuel, le deuxième signal de GPS possédant une dépendance temporelle à une position de départ,
o déterminant une distance entre la position du conducteur du deux-roues électrique et la position du partenaire de formation virtuel,
**caractérisé en ce que**
* l'unité de commande (23)
o détermine un effet de sillage en fonction d'une surface frontale totale, laquelle est formée par le deux-roues électrique et le conducteur, et de la distance déterminée, et
o génère un signal (24) destiné à commander le moteur du deux-roues électrique en fonction de l'effet de sillage et/ou de la distance.

8. Dispositif (20) selon la revendication 7, **caractérisé en ce qu'**une unité de service (22) est présente, notamment pour la saisie de données de conducteur et/ou pour la sélection d'un itinéraire, notamment avec un partenaire de formation virtuel.

9. Deux-roues électrique comportant un dispositif (20) selon l'une des revendications 7 ou 8 ou un procédé selon l'une des revendications 1 à 6, le dispositif (20) comprenant une unité de commande (23) qui possède une mémoire (25), l'unité de commande (23)
o acquérant un premier signal de GPS (21) qui représente une position du conducteur du deux-roues électrique, le premier signal de GPS possédant une dépendance temporelle à une position de départ, et
o acquérant un deuxième signal de GPS qui représente une position d'un partenaire de formation virtuel, le deuxième signal de GPS possédant une dépendance temporelle à une position de départ,
o déterminant une distance entre la position du conducteur du deux-roues électrique et la position du partenaire de formation virtuel,
**caractérisé en ce que**
* l'unité de commande (23)
o détermine un effet de sillage en fonction d'une surface frontale totale, laquelle est formée par le deux-roues électrique et le conducteur, et de la distance déterminée, et
o génère un signal (24) destiné à commander le moteur du deux-roues électrique en fonction de l'effet de sillage et/ou de la distance.
